# EUROPEAN PATENT APPLICATION

(11) **EP 4 715 932 A1**
(43) Date of publication of application: **25.03.2026**
(21) Application number: 23937841.7
(22) Date of filing: 19.05.2023
(51) Int. Cl.: H01M 10/0567, H01M 10/0525, H01M 4/13

(54) **LITHIUM ION SECONDARY BATTERY AND ELECTRIC DEVICE**

(71) Applicant: Contemporary Amperex Technology Co., Limited, Ningde, Fujian 352100 (CN)
(72) Inventor: GUO, Jie, Ningde, Fujian 352100 (CN); HAN, Changlong, Ningde, Fujian 352100 (CN); ZHANG, Cuiping, Ningde, Fujian 352100 (CN); WU, Zeli, Ningde, Fujian 352100 (CN); WANG, Guan, Ningde, Fujian 352100 (CN); CAI, Linhua, Ningde, Fujian 352100 (CN)
(74) Representative: Gong, Jinping
(86) International application number: PCT/CN2023/095367
(87) International publication number: WO 2024/239162

(57) **Abstract**

A lithium-ion secondary battery (5) and an electric apparatus are provided. The lithium-ion secondary battery (5) includes an electrolyte. The electrolyte includes alkali metal ions having an ionic radius greater than a radius of lithium ions and a film-forming additive. Based on a total mass of the electrolyte, a mass percentage A of the alkali metal ions and a mass percentage B of the additive satisfy 0.10≤B/A≤6×10⁴.The lithium-ion secondary battery (5) exhibits a low direct current resistance and excellent cycling performance.

## Description

### TECHNICAL FIELD

This application relates to the field of secondary battery technology, and in particular, to a lithium-ion secondary battery and an electric apparatus.

### BACKGROUND

In recent years, secondary batteries have been widely applied in energy storage power systems such as hydroelectric, thermal, wind, and solar power stations, as well as in electric tools, electric bicycles, electric motorcycles, electric vehicles, military equipment, aerospace, and various other fields, with continuously increasing requirements for the electrical performance of secondary batteries.

Performance of an electrolyte has a critical impact on performance of secondary batteries. Therefore, it is necessary to develop an electrolyte to improve the performance of secondary batteries to satisfy application needs of next-generation electrochemical systems.

### SUMMARY

An object of this application is to provide a lithium-ion secondary battery and to reduce a direct current resistance of the lithium-ion secondary battery and improve power performance and cycling performance of the lithium-ion secondary battery.

To achieve the above object, a first aspect of this application provides a lithium-ion secondary battery including an electrolyte, where the electrolyte includes alkali metal ions having an ionic radius greater than a radius of lithium ions and a film-forming additive; and
based on a total mass of the electrolyte, a mass percentage A of the alkali metal ions and a mass percentage B of the additive satisfy 0.10≤B/A≤6×10⁴.

The electrolyte including alkali metal ions and the film-forming additive helps to reduce the direct current resistance of the lithium-ion secondary battery and mitigate the metal dendrites in the lithium-ion secondary battery, thereby enhancing the power performance and cycling performance of the lithium-ion secondary battery. On one hand, introducing alkali metal ions with a metal ionic radius greater than a radius of lithium ions into the electrolyte facilitates the formation of favorable channels for lithium-ion transport during charge/discharge of the lithium-ion secondary battery, thereby reducing the direct current resistance of the lithium-ion secondary battery. On the other hand, introducing the film-forming additive into the electrolyte facilitates the formation of a uniform and dense inorganic SEI film at an interface between the negative electrode plate and the electrolyte can effectively suppress metal dendrites, and improving the safety of the lithium-ion secondary battery. The inorganic SEI film is also capable of further inhibiting interfacial side reactions between the electrolyte and the negative electrode plate, improving the cycling performance of the lithium-ion secondary battery. Additionally, controlling the relationship between the mass percentage A of the alkali metal ions and the mass percentage B of the film-forming additive to satisfy 0.10≤B/A≤6×10⁴ not only reduces the direct current resistance of the lithium-ion secondary battery but also further enhances the power performance and cycling performance of the battery.

In any embodiment, the lithium-ion secondary battery includes a negative electrode plate, the negative electrode plate includes a current collector and a negative electrode active material layer that is located on at least one side of the current collector and that includes at least a negative electrode active material, a porosity C of the negative electrode active material layer and the mass percentage A of the alkali metal ions in the total mass of the electrolyte satisfy 10⁻⁶≤A/C≤0.035, optionally, 5×10⁻⁵≤A/C≤0.025.

Controlling the porosity of the negative electrode active material layer and the mass percentage of the alkali metal ions to satisfy an appropriate relationship facilitates better and faster electrolyte infiltration into the negative electrode plate, improving lithium-ion transport, mitigating concentration polarization during lithium-ion transport, enhancing electrical performance of the lithium-ion secondary battery, and mitigating the metal dendrites, thereby balancing the dynamics and cycling performance of the lithium-ion secondary battery.

In any embodiment, based on the total mass of the electrolyte, the percentage A of the alkali metal ions and the mass percentage B of the film-forming additive satisfy 0.14≤B/A≤2000.

Controlling the relationship between the mass percentage A of the alkali metal ions and the mass percentage B of the film-forming additive to satisfy the above relationship further reduces the direct current resistance of the lithium-ion secondary battery and enhances the cycling performance of the battery.

In any embodiment, the alkali metal ions include one or more of Na⁺, K⁺, and Cs⁺.

The above alkali metal ions all facilitates lithium-ion transport, improving the power performance of the battery.

In any embodiment, based on the total mass of the electrolyte, the mass percentage A of the alkali metal ions satisfies 1 ppm≤A≤7000 ppm, optionally, 100 ppm≤A≤7000 ppm.

Controlling the alkali metal ions within an appropriate range enhances the power performance of the battery.

In any embodiment, the electrolyte further includes anions, and the anions include one or more of PO₂F₂⁻, FSO₃⁻, DFOB⁻, BF₄⁻, DFOP⁻, BOB⁻, and PO₃F²⁻.

In some embodiments, based on the total mass of the electrolyte, a mass percentage of the anions is greater than 0 and less than or equal to 5%, optionally, based on the total mass of the electrolyte, the mass percentage of the anions is greater than 0 and less than or equal to 4%.

The above anions help to improve the cycling performance and prolong a cycle life of the secondary battery. For example, for a positive electrode plate including a lithium transition metal oxide positive electrode active material, lone pair electrons contained in the above anions are capable of bonding with lithium ions on the surface of the positive electrode plate, altering Li/Ni mixing, stabilizing a structure of the positive electrode plate, altering a surface charge transfer resistance (Rct) of the positive electrode plate, and enhancing the cycling performance and cycle life of the lithium-ion secondary battery; and for a positive electrode plate including a lithium-containing phosphate positive electrode active material, the above anions are capable of forming a dense SEI film on the surface of the negative electrode plate, prolonging a service life of the battery.

Controlling the mass percentage of the introduced anions within an appropriate range improves the cycling performance of the lithium-ion secondary battery and helps to reduce metal dendrites.

In any embodiment, the film-forming additive includes one or more of a fluorinated carbonate compound, a sulfate compound, and a sulfonate compound.

The addition of the film-forming additive facilitates the formation of a uniform and dense inorganic SEI film. For example, a fluorinated carbonate compound can form an inorganic SEI film rich in LiF and LiCO₃ on the surface of the negative electrode plate; a sulfate compound can form an inorganic SEI film rich in Li₂SO₄ on the surface of the negative electrode plate; and the sulfonate compound can form an inorganic SEI film rich in Li₂SO₃ on the surface of the negative electrode plate. The inorganic SEI film can suppress the metal dendrites and prevent reactions between the electrolyte and the positive/negative electrode plate, improving stability of the lithium-ion secondary battery and enhancing the cycling performance.

In any embodiment, the fluorinated carbonate compound includes one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, and trifluoromethylethylene carbonate, and optionally includes fluoroethylene carbonate;
the sulfate compound includes one or more of 4,4'-Bi-1,3,2-dioxathiolane 2,2,2'2'-tetraoxide, ethylene sulfate, diethyl sulfate, dimethyl sulfate, and 4,4-bis(1,3,2-dioxathiolane)-2,2,2,2-tetraoxide, and optionally includes one or more of 4,4'-Bi-1,3,2-dioxathiolane 2,2,2'2'-tetraoxide and ethylene sulfate; and/or
the sulfonate compound includes one or more of 1,3-propane sultone, propylene sultone, and 3-fluoro-1,3-propane sultone, and optionally includes 1,3-propane sultone.

The above fluorinated carbonate compound, sulfate compound, and sulfonate compound all can form a uniform and dense inorganic SEI film .

In any embodiment, based on the total mass of the electrolyte, the mass percentage B of the film-forming additive satisfies 0.1%≤B≤7%, optionally, 0.1%≤B≤6%.

Controlling the mass percentage of the film-forming additive within an appropriate range enables the formation of sufficient uniform and dense inorganic SEI films, suppressing dendrites, inhibiting interfacial side reactions, and reducing side reactions in the lithium-ion secondary battery.

In any embodiment, the porosity C of the negative electrode active material layer is 20% to 60%, optionally, 20% to 40%.

Controlling the porosity of the negative electrode active material layer within an appropriate range improves electrolyte infiltration into the negative electrode plate, improving lithium-ion transport, mitigating concentration polarization during lithium-ion transport, enhancing electrical performance of the lithium-ion secondary battery, and mitigating the metal dendrites. In addition, the risk of increase in a contact area between the electrolyte and the negative electrode active material due to excessive porosity can be reduced, reducing side reactions.

In any embodiment, based on the total mass of the electrolyte, a mass percentage of the lithium salt is 8% to 20%, optionally, 8% to 15%.

Controlling the mass percentage of lithium salt within an appropriate range facilitates lithium-ion transfer, reducing the direct current resistance of the lithium-ion secondary battery.

In any embodiment, the lithium salt includes a first lithium salt and/or a second lithium salt, and each of the first lithium salt and the second lithium salt is independently selected from one or more of LiFSI, LiPF₆, LiBF₄, LiTFSI, LiClO₄, LiAsF₆, LiBOB, LiDFOB, and LiDFOP. In some embodiments, the first lithium salt is selected from LiFSI, and the second lithium salt is selected from LiPF₆.

LiFSI, with larger anions, can effectively promote lithium-ion transfer, enabling the lithium-ion secondary battery to exhibit an excellent lithium-ion transference number, reducing the direct current resistance of the battery and the precipitation of metal dendrites. In addition, LiFSI is insensitive to water, exhibiting good thermal stability, further improving the safety of the lithium-ion secondary battery. The film-forming thermal stability of LiPF₆ is superior to that of LiFSI. Thus, the combined use of LiFSI and LiPF₆ ensures both the electrical performance and thermal stability of the lithium-ion secondary battery.

In some embodiments, a mass ratio of LiFSI to LiPF₆ is not less than 0.1 and not greater than 5. Optionally, the mass ratio of LiFSI to LiPF₆ is not less than 3 and not greater than 5.

Controlling the mass ratio of the first lithium salt to the second lithium salt to satisfy an appropriate range enables the lithium-ion secondary battery to exhibit excellent electrical performance.

In any embodiment, the electrolyte further includes a solvent, and the solvent includes a cyclic ester solvent and/or a linear ester solvent;
the cyclic ester solvent includes one or more of ethylene carbonate and propylene carbonate; and
the linear ester solvent includes one or more of dimethyl carbonate, diethyl carbonate, methyl propyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, and isoamyl acetate.

The above solvents are all can be used in combination with an alkali metal salt and a film-forming additive, enabling the lithium-ion secondary battery to exhibit low direct current resistance and excellent cycling performance.

In some embodiments, based on a total mass of the solvent, a mass percentage of the cyclic ester solvent is A, and a mass percentage of the linear ester solvent is (100%-A). In some embodiments, A is 0% to 40%, 2% to 40%, or 5% to 35%.

In any embodiment, based on the total mass of the solvent, the mass percentage of the cyclic ester solvent is 2% to 40%, optionally, 5% to 35%; and the mass percentage of the linear ester solvent is 50% to 100%, optionally, 60% to 95%.

Controlling the mass percentages of the cyclic ester solvent and the linear ester solvent within appropriate ranges enables the lithium-ion secondary battery to exhibit excellent electrical performance and safety.

In any embodiment, the negative electrode active material layer includes one or more of artificial graphite, natural graphite, soft carbon, hard carbon, silicon-carbon composite, lithium titanate, and silicon-oxygen composite.

A negative electrode active material layer including the above negative electrode active material exhibits an appropriate porosity.

In any embodiment, the lithium-ion secondary battery includes a positive electrode plate, the positive electrode plate includes one or more of a lithium transition metal oxide positive electrode active material, and a lithium-containing phosphate positive electrode active material.

A second aspect of this application further provides an electric apparatus, including the lithium-ion secondary battery according to the first aspect of this application.

### BRIEF DESCRIPTION OF DRAWINGS

FIG. 1 is a schematic diagram of a lithium-ion secondary battery according to an embodiment of this application;
FIG. 2 is an exploded view of the lithium-ion secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electric apparatus using a lithium-ion secondary battery as a power source according to an embodiment of this application.

Description of reference signs:
1. battery pack; 2. upper box body; 3. lower box body; 4. battery module; 5. lithium-ion secondary battery; 51. housing; 52. electrode assembly; and 53. cover plate.

### DESCRIPTION OF EMBODIMENTS

Hereinafter, embodiments specifically disclosing the lithium-ion secondary battery and electric apparatus of this application are described in detail with appropriate reference to the drawings. However, unnecessary detailed descriptions may be omitted. For example, detailed descriptions of well-known matters or redundant descriptions of substantially identical structures may be omitted. This is to avoid unnecessarily lengthy descriptions and facilitate understanding by persons skilled in the art. Additionally, the drawings and the following descriptions are provided to enable persons skilled in the art to fully understand this application and are not intended to limit the subject matter recited in the claims.

A "range" disclosed in this application is defined in a form of lower and upper limits, and a given range is defined by a selected lower limit and upper limit. The selected lower limit and upper limit define boundaries of a particular range. A range defined in this manner may include or exclude endpoints and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and if maximum range values of 3, 4, and 5 are listed, the following ranges are all contemplated: 1-3, 1-4, 1-5, 2-3, 2-4, and 2-5. In this application, unless otherwise specified, a numerical range "a-b" represents a shorthand representation of any real number combination between a and b, where a and b are both real numbers. For example, the numerical range "0-5" indicates that all real numbers between "0-5" have been listed herein, and "0-5" is merely a shorthand representation of these numerical combinations. Additionally, when a parameter is expressed as an integer greater than or equal to 2, it is equivalent to disclosing that the parameter is, for example, an integer 2, 3, 4, 5, 6, 7, 8, 9, 10, 11, 12, and the like.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably, performed sequentially. For example, a method including steps (a) and (b) indicates that the method may include steps (a) and (b) performed sequentially, or steps (b) and (a) performed sequentially. For example, the mentioned method may further include step (c), indicating that step (c) may be added to the method in any position, for example, the method may include steps (a), (b), and (c), or steps (a), (c), and (b), or steps (c), (a), and (b), and the like.

Unless otherwise specified, the terms "comprising" and "including" mentioned in this application indicate an open-ended or closed-ended inclusion. For example, "comprising" and "including" may indicate that other components not listed may also be included or included, or only the listed components may be included or included.

Unless otherwise specified, in this application, the term "or" is inclusive. For example, the phrase "A or B" means "A, B, or both A and B." More specifically, any of the following conditions satisfy the condition "A or B": A is true (or present) and B is false (or absent); A is false (or absent) and B is true (or present); or both A and B are true (or present).

The metal ion transport rate significantly affects battery performance. For example, in lithium batteries, a lower lithium-ion transport rate may lead to undesirable increased direct current resistance, reduced cycling performance, and the like. Introducing other metal ions with larger ionic radii into an electrolyte may enable formation of favorable channels for lithium-ion transport during charge/discharge, thereby improving power performance. However, the introduced metal ions with a higher electrode potential than that of lithium ions are more likely to deposit as more reactive metals during deposition, or even form dendrites, severely affecting safety of the batteries. Therefore, a new battery capable of balancing power performance and cycling performance is required.

### [Lithium-ion secondary battery]

Based on this, this application provides a lithium-ion secondary battery, where the lithium-ion secondary battery includes an electrolyte, the electrolyte includes an alkali metal ion having an ionic radius greater than that of lithium ion and a film-forming additive; and based on a total mass of the electrolyte, a mass percentage A of the alkali metal ions and a mass percentage B of the additive satisfy 0.10≤B/A≤6×10⁴.

In this specification, the term "alkali metal ions" refers to ions of alkali metals, including but not limited to Na⁺, K⁺, or Cs⁺. Alkali metal ions may be introduced into the secondary battery by adding an alkali metal salt to the electrolyte.

In this specification, the term "film-forming additive" refers to an additive capable of reacting with metal lithium to form an inorganic SEI film, including but not limited to a fluorinated carbonate compound, sulfate compound, or sulfonate compound.

Introducing alkali metal ions with a metal ionic radius greater than a radius of lithium ions into the electrolyte facilitates the formation of favorable channels for lithium-ion transport during charge/discharge of the lithium-ion secondary battery, thereby reducing a direct current resistance of the lithium-ion secondary battery. However, the added alkali metal ions easily deposit as metal dendrites during charge/discharge of the secondary battery. Introducing the film-forming additive into the electrolyte facilitates the formation of a uniform and dense inorganic SEI film at an interface between the negative electrode plate and the electrolyte can effectively suppress metal dendrites, helping to avoid or reduce risks associated with alkali metal ions, and improving the safety of the lithium-ion secondary battery. The inorganic SEI film is also capable of further inhibiting interfacial side reactions between the electrolyte and the negative electrode plate. The introduction of alkali metal ions and the film-forming additive helps to simultaneously enhance the power performance and cycling performance of the lithium-ion secondary battery.

In some embodiments, based on the total mass of the electrolyte, the mass percentage A of the alkali metal ions and the mass percentage B of the film-forming additive satisfy: B/A optionally is 0.14, 0.2, 0.4, 0.5, 0.8, 1, 5, 10, 50, 100, 500, 1000, 2000, 3000, 4000, 5000, 6000, 7000, 8000, 9000, 1×10⁴, 1.5×10⁴, 2x10⁴, 2.5×10⁴, 3×10⁴, 3.5×10⁴, 4×10⁴, 4.5×10⁴, 5×10⁴, 5.5×10⁴, 6×10⁴, or a value within a range defined by any two of the above values.

The mass percentage of metal ions may be determined according to industry detection standards by using detection methods known to persons skilled in the art, such as the inductively coupled plasma technology.

In some embodiments, based on the total mass of the electrolyte, the percentage A of the alkali metal ions and the mass percentage B of the film-forming additive satisfy 0.2≤B/A≤5×10⁴. In some embodiments, based on the total mass of the electrolyte, the percentage A of the alkali metal ions and the mass percentage B of the film-forming additive satisfy 0.14≤B/A≤2000. The electrolyte including alkali metal ions and the film-forming additive helps to reduce the direct current resistance of the lithium-ion secondary battery and mitigate the metal dendrites in the lithium-ion secondary battery, thereby enhancing the power performance and cycling performance of the lithium-ion secondary battery.

It can be understood that since a standard electrode potential of an electrode formed by alkali metal ions in reduced state is higher than a standard electrode potential of lithium, during discharge of a lithium-ion secondary battery, the alkali metal ions easily precipitate as corresponding metals or even metallic dendrites on the negative electrode plate, significantly impairing the cycling performance and safety of lithium-ion secondary battery. Therefore, adding the film-forming additive to the electrolyte helps to form a dense inorganic SEI film, suppress the formation of metal dendrites, and improve the safety and cycling performance of the secondary battery. Additionally, controlling the relationship between the mass percentage A of the alkali metal ions and the mass percentage B of the film-forming additive to satisfy 0.10≤B/A≤6×10⁴ not only reduces the direct current resistance of the lithium secondary battery but also further enhances the cycling performance of the battery.

In some embodiments, the lithium-ion secondary battery includes a negative electrode plate, the negative electrode plate includes a current collector and a negative electrode active material layer that is located on at least one side of the current collector and that includes at least a negative electrode active material, a porosity C of the negative electrode active material layer and the mass percentage A of the alkali metal ions in the total mass of the electrolyte satisfy 10⁻⁶≤A/C≤0.035, optionally 5×0⁻⁵≤A/C≤0.035 or 5×10⁻⁵≤ A/C≤0.025.

In some embodiments, a ratio A/C of the porosity C of the negative electrode active material layer to the mass percentage A of the alkali metal ions in the total mass of the electrolyte is optionally 10⁻⁶, 2×10⁻⁶, 5× 10⁻⁶, 7×10⁻⁶, 10⁻⁵, 2×10⁻⁵, 5×10⁻⁵, 8×10⁻⁵ 10⁻⁴, 2×10⁻⁴, 5×10⁻⁴, 7×10⁻⁴, 0.001, 0.002, 0.005, 0.008, 0.01, 0.015, 0.02, 0.025, 0.03, 0.035, or a value within a range defined by any two of the above values.

The porosity of the negative electrode active material layer may be adjusted based on a compacted density of the negative electrode plate film layer. Generally, increasing the compacted density reduces the porosity of the material layer.

The porosity of the negative electrode active material layer may be measured by any known means, including but not limited to BET. For example, as an example, an inert gas with a small molecular diameter, such as helium or nitrogen, is used to accurately measure a true volume of a sample according to a displacement method, and the porosity of the sample is obtained based on Boyle's law (PV=nRT). The porosity P=(V11-V12)/V11×100%, where V11 represents an apparent volume of the negative electrode active material layer, and V12 represents a true volume of the negative electrode active material layer.

Controlling the relationship between the porosity of the negative electrode active material layer and the mass percentage of the alkali metal ions to satisfy an appropriate range facilitates better and faster electrolyte infiltration into the negative electrode plate, improving lithium-ion transport, mitigating concentration polarization during lithium-ion transport, enhancing electrical performance of the lithium-ion secondary battery, and mitigating the metal dendrites, thereby balancing the dynamics and cycling performance of the lithium-ion secondary battery.

In some embodiments, the alkali metal ions include one or more of Na⁺, K⁺, and Cs⁺. In some embodiments, the alkali metal ions include Na⁺. In some embodiments, the alkali metal ions include K⁺. In some embodiments, the alkali metal ions include Cs⁺. In some embodiments, the alkali metal ions include Na⁺ and Cs⁺.

The above alkali metal ions all help lithium-ion transport, improving the power performance of the battery.

In some embodiments, based on the total mass of the electrolyte, the mass percentage A of the alkali metal ions satisfies 1 ppm≤A≤7000 ppm, optionally 100 ppm≤A≤7000 ppm. In some embodiments, based on the total mass of the electrolyte, the mass percentage A of the alkali metal ions is optionally 1 ppm, 5 ppm, 10 ppm, 50 ppm, 100 ppm, 500 ppm, 1000 ppm, 2000 ppm, 3000 ppm, 4000 ppm, 5000 ppm, 6000 ppm, 7000 ppm, or a value within a range defined by any two of the above values.

It can be understood that alkali metal ions in the electrolyte may participate in the formation of the SEI film, and then the alkali metal ions are consumed, resulting in reduction in the mass percentage of alkali metal ions in the electrolyte. For example, the mass percentage of alkali metal ions in the electrolyte may be 1 ppm. Thus, based on the total mass of the electrolyte, a mass percentage of alkali metal ions within 1 ppm to 7000 ppm is within the protection scope of the embodiments of this application.

Controlling the alkali metal ions within an appropriate range enhances the power performance of the battery.

In some embodiments, the electrolyte further includes anions, and the anions includes one or more of PO₂F₂⁻, FSO₃⁻, DFOB⁻, BF₄⁻, DFOP⁻, BOB⁻, and PO₃F²⁻. In some embodiments, the anions included in the electrolyte may be introduced together with the alkali metal ions or through an electrolyte additive. For example, a lithium salt additive containing one of the above anions is introduced into the electrolyte.

In some embodiments, based on the total mass of the electrolyte, a mass percentage of the anions is greater than 0 and less than or equal to 5%, optionally, based on the total mass of the electrolyte, the mass percentage of the anions is greater than 0 and less than or equal to 4%. In some embodiments, based on the total mass of the electrolyte, the mass percentage of the anions is optionally 0.01%, 0.02%, 0.05%, 0.1%, 0.3%, 0.5%, 0.8%, 1%, 1.3%, 1.5%, 1.8%, 2%, 2.5%, 3%, 3.5%, 4%, 4.5%, 5%, or a value within a range defined by any two of the above values.

The mass percentage of anions in the electrolyte or the electrolyte of the secondary battery may be detected using detection equipment and methods commonly used in the art. For example, the mass percentage of anions may be tested using nuclear magnetic resonance spectroscopy.

In some embodiments, the mass percentage of anions may be tested using a benchtop nuclear magnetic resonance spectrometer X-Pulse from Oxford Instruments. For example, the test is performed according to detection methods commonly used in the art.

The above anions help to improve the cycling performance and prolong a cycle life of the secondary battery. For example, for a positive electrode plate including a lithium transition metal oxide positive electrode active material, lone pair electrons contained in the above anions are capable of bonding with lithium ions on the surface of the positive electrode plate, altering Li/Ni mixing, stabilizing the structure of the positive electrode plate, altering a surface charge transfer resistance (Rct) of the positive electrode plate, and enhancing the cycling performance and cycle life of the lithium-ion secondary battery; and for a positive electrode plate including a lithium-containing phosphate positive electrode active material, the above anions are capable of forming a dense SEI film on the surface of the negative electrode plate, prolonging a service life of the battery.

Controlling the mass percentage of the introduced anions within an appropriate range improves the cycling performance of the lithium-ion secondary battery and helps to reduce metal dendrites.

In some embodiments, the film-forming additive includes one or more of a fluorinated carbonate compound, sulfate compound, and sulfonate compound.

In some embodiments, the film-forming additive includes a fluorinated carbonate compound. In some embodiments, the film-forming additive includes a sulfate compound. In some embodiments, the film-forming additive includes a sulfonate compound. In some embodiments, the film-forming additive includes a fluorinated carbonate compound and sulfate compound. In some embodiments, the film-forming additive includes a fluorinated carbonate compound and sulfonate compound.

The addition of the film-forming additive facilitates the formation of a uniform and dense inorganic SEI film. For example, a fluorinated carbonate compound can form an inorganic SEI film rich in LiF and LiCO₃ on the surface of the negative electrode plate; a sulfate compound can form an inorganic SEI film rich in Li₂SO₄ on the surface of the negative electrode plate; and the sulfonate compound can form an inorganic SEI film rich in Li₂SO₃ on the surface of the negative electrode plate. The inorganic SEI film can suppress the metal dendrites and prevent reactions between the electrolyte and the positive/negative electrode plate, improving stability of the lithium-ion secondary battery and enhancing the cycling performance.

In some embodiments, the fluorinated carbonate compound includes one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, and trifluoromethylethylene carbonate, and optionally includes fluoroethylene carbonate;
the sulfate compound includes one or more of 4,4'-Bi-1,3,2-dioxathiolane 2,2,2'2'-tetraoxide, ethylene sulfate, diethyl sulfate, dimethyl sulfate, and 4,4-bis(1,3,2-dioxathiolane)-2,2,2,2-tetraoxide, and optionally includes one or more of 4,4'-Bi-1,3,2-dioxathiolane 2,2,2'2'-tetraoxide and ethylene sulfate; and/or
the sulfonate compound includes one or more of 1,3-propane sultone, propylene sultone, and 3-fluoro-1,3-propane sultone, and optionally includes 1,3-propane sultone.

The above fluorinated carbonate compound, sulfate compound, and sulfonate compound all can form a uniform and dense inorganic SEI film.

In some embodiments, based on the total mass of the electrolyte, the mass percentage B of the film-forming additive satisfies 0.1%≤B≤7%, optionally, 0.1%≤B≤6%.

In some embodiments, based on the total mass of the electrolyte, the mass percentage B of the film-forming additive is optionally 0.1 %, 0.5%, 1%, 1.5%, 2%, 2.5%, 3%, 3.5%, 4%, 4.5%, 5%, 5.5%, 6%, 6.5%, 7%, or a value within a range defined by any two of the above values.

Controlling the mass percentage of the film-forming additive within an appropriate range enables the formation of sufficient uniform and dense inorganic SEI films, suppressing dendrites, inhibiting interfacial side reactions, and reducing side reactions in the lithium-ion secondary battery.

In some embodiments, the porosity C of the negative electrode active material layer is 20% to 60%, optionally, 20% to 40%.

In some embodiments, the porosity C of the negative electrode active material layer is optionally 20%, 25%, 30%, 35%, 40%, 45%, 50%, 55%, 60%, or a value within a range defined by any two of the above values.

Controlling the porosity of the negative electrode active material layer within an appropriate range improves electrolyte infiltration into the negative electrode plate, improving lithium-ion transport, mitigating concentration polarization during lithium-ion transport, enhancing electrical performance of the lithium-ion secondary battery, and mitigating the metal dendrites. In addition, the risk of increase in a contact area between the electrolyte and the negative electrode active material due to excessive porosity can be reduced, reducing side reactions.

In some embodiments, based on the total mass of the electrolyte, a mass percentage of the lithium salt is 8% to 20%, optionally, 9% to 18% or 8% to 15%.

In some embodiments, based on the total mass of the electrolyte, the mass percentage of lithium salt is 8%, 9%, 10%, 12%, 14%, 15%, 16%, 18%, 20%, or a value within a range defined by any two of the above values.

Controlling the mass percentage of lithium salt within an appropriate range facilitates lithium-ion transfer, reducing the direct current resistance of the lithium-ion secondary battery.

In some embodiments, the lithium salt includes a first lithium salt and/or a second lithium salt, and each of the first lithium salt and the second lithium salt is independently selected from one of LiFSI, LiPF₆, LiBF₄, LiTFSI, LiClO₄, LiAsF₆, LiBOB, LiDFOB, and LiDFOP.

In some embodiments, the lithium salt includes a first lithium salt. In some embodiments, the lithium salt includes a second lithium salt. In some embodiments, the lithium salt includes the first lithium salt and the second lithium salt. In some embodiments, the first lithium salt is selected from LiFSI. In some embodiments, the second lithium salt is selected from LiPF₆.

LiFSI, with larger anions, can effectively promote lithium-ion transfer, enabling the lithium-ion secondary battery to exhibit an excellent lithium-ion transference number, reducing the direct current resistance of the battery and the precipitation of metal dendrites. In addition, LiFSI is insensitive to water, exhibiting good thermal stability, further improving the safety of the lithium-ion secondary battery. The film-forming thermal stability of LiPF₆ is superior to that of LiFSI. Thus, the combined use of LiFSI and LiPF₆ ensures both the electrical performance and thermal stability of the lithium-ion secondary battery.

In some embodiments, a mass ratio of the first lithium salt LiFSI to the second lithium salt LiPF₆ is not less than 0.1 and not greater than 5; optionally, the mass ratio of the first lithium salt LiFSI to the second lithium salt LiPF₆ is not less than 3 and not greater than 5.

In some embodiments, the mass ratio of the first lithium salt to the second lithium salt is optionally 0.1, 0.2, 0.5, 1, 1.5, 2, 2.5, 3, 3.5, 4, 4.5, 5, or a value within a range defined by any two of the above values.

Controlling the mass ratio of the first lithium salt to the second lithium salt to satisfy an appropriate range enables the lithium-ion secondary battery to exhibit excellent electrical performance.

In some embodiments, the electrolyte further includes a solvent, and the solvent includes a cyclic ester solvent and/or a linear ester solvent;
the cyclic ester solvent includes one or more of ethylene carbonate and propylene carbonate; and
the linear ester solvent includes one or more of dimethyl carbonate, diethyl carbonate, methyl propyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, and isoamyl acetate.

The above solvents are all can be used in combination with an alkali metal salt and a film-forming additive, enabling the lithium-ion secondary battery to exhibit low direct current resistance and excellent cycling performance.

In some embodiments, based on a total mass of the solvent, a mass percentage of the cyclic ester solvent is A, and a mass percentage of the linear ester solvent is (100%-A), where the mass percentage A of the cyclic ester solvent is 0% to 40%, 2% to 40%, or 5% to 35%.

In some embodiments, based on the total mass of the solvent, the mass percentage of the cyclic ester solvent is 2% to 40%, optionally, 5% to 35%; and the mass percentage of the linear ester solvent is 50% to 100%, optionally, 60% to 95%.

In some embodiments, based on the total mass of the solvent, the mass percentage of the cyclic ester solvent is optionally 0%, 0.01%, 1%, 5%, 10%, 15%, 20%, 25%, 30%, 35%, 40%, or a value within a range defined by any two of the above values. Based on the total mass of the solvent, the mass percentage of the linear ester solvent is 50%, 55%, 60%, 65%, 70%, 75%, 80%, 85%, 90%, 95%, 100%, or a value within a range defined by any two of the above values.

Controlling the mass percentages of the cyclic ester solvent and the linear ester solvent within appropriate ranges enables the lithium-ion secondary battery to exhibit excellent electrical performance and safety.

### [Positive electrode plate]

The positive electrode plate includes a positive electrode current collector and a positive electrode film layer disposed on at least one surface of the positive electrode current collector, and the positive electrode film layer includes a positive electrode active material.

As an example, the positive electrode current collector has two opposite surfaces in a thickness direction of the positive electrode current collector, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be obtained by forming a metal material (such as aluminum, aluminum alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material known in the art for batteries. As an example, the positive electrode active material may include at least one of the following materials: a lithium-containing phosphate with an olivine structure, a lithium transition metal oxide, and their respective modified compounds. However, this application is not limited to these materials, and other conventional materials that can be used as positive electrode active materials for batteries may also be used. Only one positive electrode active material may be used, or two or more may be combined.

In some embodiments, the positive electrode active material includes one or more of a lithium transition metal oxide positive electrode active material and a lithium-containing phosphate positive electrode active material.

In some embodiments, the lithium transition metal oxide has a structure represented by the following formula:

LiNiₓCo_{y}N_{z}M_{1-x-y-z}O₂,

where N is selected from Mn and Al, M is selected from any one of Ni, Mn, Mg, Cu, Zn, Al, Sn, B, Ga, Cr, Sr, V, and Ti, 0<x<1, 0≤y≤1, 0≤z≤1, and x+y+z≤1.

In some embodiments, the lithium transition metal oxide includes at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (such as LiNi_{0.85}Co_{0.15}Al_{0.05}O₂), and their modified compounds.

In some embodiments, the lithium-containing phosphate includes at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by using the following method: dispersing components for preparing the positive electrode plate, such as the positive electrode active material, conductive agent, binder, and any other components, in a solvent (such as N-methylpyrrolidone) to form a positive electrode slurry; applying the positive electrode slurry on the positive electrode current collector; and performing drying, cold pressing, and the like to obtain the positive electrode plate.

### [Negative electrode plate]

The negative electrode plate includes a negative electrode current collector and a negative electrode active material layer that is located on at least one side of the negative electrode current collector and that includes at least a negative electrode active material.

As an example, the negative electrode current collector has two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be obtained by forming a metal material (such as copper, copper alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. Only one negative electrode active material may be used, or two or more may be combined.

In some embodiments, the negative electrode active material includes one or more of artificial graphite, natural graphite, soft carbon, hard carbon, silicon-carbon composite, lithium titanate, and silicon-oxygen composite.

In some embodiments, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (such as sodium carboxymethyl cellulose (CMC-Na)).

In some embodiments, the negative electrode plate may be prepared by using the following method: dispersing components for preparing the negative electrode plate, such as the negative electrode active material, conductive agent, binder, and any other components, in a solvent (such as deionized water) to form a negative electrode slurry; applying the negative electrode slurry on the negative electrode current collector; and performing drying, cold pressing, and other processes to obtain the negative electrode plate.

### [Separator]

In some embodiments, the lithium-ion secondary battery further includes a separator. Any known porous-structure separator with good chemical and mechanical stability may be used.

In some embodiments, a material of the separator may be selected from at least one of glass fiber, non-woven fabric, polyethylene, polypropylene, and polyvinylidene fluoride. The separator may be a single-layer film or a multilayer composite film. When the separator is a multilayer composite film, materials of the layers may be the same or different.

In some embodiments, the positive electrode plate, negative electrode plate, and separator may be formed into an electrode assembly through a winding process or a lamination process.

In some embodiments, the lithium-ion secondary battery may include an outer package. The outer package may be used to encapsulate the above electrode assembly and electrolyte.

In some embodiments, the outer package of the lithium-ion secondary battery may be a hard shell, such as a hard plastic shell, an aluminum shell, or a steel shell. The outer package of the lithium-ion secondary battery may alternatively be a soft pack, such as a soft pouch. A material of the soft pack may be plastic, including, for example, polypropylene, polybutylene terephthalate, and polybutylene succinate.

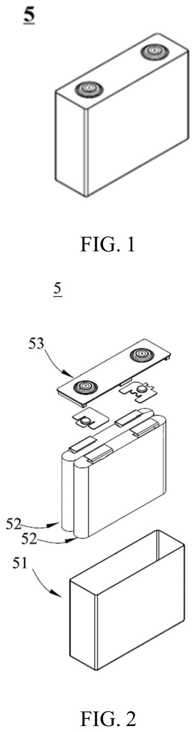

A shape of the lithium-ion secondary battery is not limited in this application and may be cylindrical, prismatic, or any other shape. For example, FIG. 1 shows a lithium-ion secondary battery 5 with a prismatic structure as an example.

In some embodiments, referring to FIG. 2, an outer package may include a housing 51 and a cover plate 53. The housing 51 may include a bottom plate and a side plate connected to the bottom plate, and the bottom plate and side plate enclose an accommodating cavity. The housing 51 has an opening communicating with the accommodating cavity, and the cover plate 53 can cover the opening to close the accommodating cavity. The positive electrode plate, negative electrode plate, and separator may be formed into an electrode assembly 52 through a winding process or a lamination process. The electrode assembly 52 is encapsulated in the accommodating cavity. An electrolyte infiltrates into the electrode assembly 52. One or more electrode assemblies 52 may be contained in the lithium-ion secondary battery 5. This may be determined by persons skilled in the art according to specific actual needs.

In some embodiments, the lithium-ion secondary battery may be assembled into a battery module, and one or more lithium-ion secondary batteries may be contained in the battery module. A specific quantity may be determined by persons skilled in the art according to the application and a capacity of the battery module.

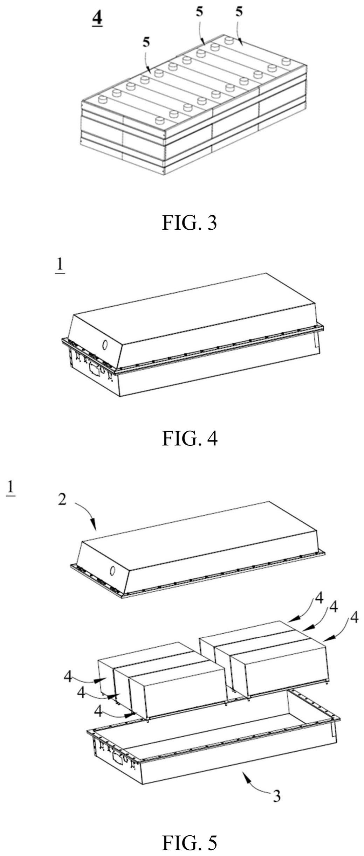

FIG. 3 shows a battery module 4 as an example. Refer to FIG. 3. In the battery module 4, a plurality of lithium-ion secondary batteries 5 may be sequentially arranged along a length direction of the battery module 4. Certainly, the batteries may be arranged in any other manner. Further, the plurality of lithium-ion secondary batteries 5 may be fixed by fasteners.

Optionally, the battery module 4 may further include an enclosure with an accommodating space, and the plurality of lithium-ion secondary batteries 5 are accommodated in the accommodating space.

In some embodiments, the above battery module may also be assembled into a battery pack, and one or more battery modules may be contained in the battery pack. A specific quantity may be determined by persons skilled in the art according to the application and a capacity of the battery pack.

FIG. 4 and FIG. 5 show a battery pack 1 as an example. Refer to FIG. 4 and FIG. 5. The battery pack 1 may include a battery box and a plurality of battery modules 4 disposed in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

Additionally, this application further provides an electric apparatus, where the electric apparatus includes at least one of a lithium-ion secondary battery, battery module, or battery pack provided by this application. The lithium-ion secondary battery, battery module, or battery pack may be used as a power source of the electric apparatus or as an energy storage unit of the electric apparatus. The electric apparatus may include mobile devices (such as mobile phones and laptops), electric vehicles (such as pure electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

As the electric apparatus, the lithium-ion secondary battery, battery module, or battery pack may be selected according to usage requirements.

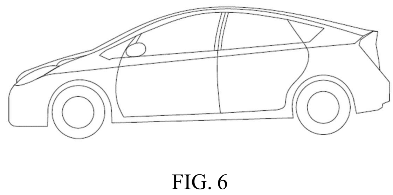

FIG. 6 shows an electric apparatus as an example. The electric apparatus is a pure electric vehicle, a hybrid electric vehicle, or a plug-in hybrid electric vehicle. To meet requirements for high power and high energy density of the lithium-ion secondary battery for the electric apparatus, a battery pack or battery module may be used.

As another example, the apparatus may be a mobile phone, tablet computer, laptop, or the like. The apparatus typically needs to be thin and light, and a lithium-ion secondary battery may be used as a power source.

### Examples

Hereinafter, examples of this application are described. The examples described below are illustrative and are merely used to explain this application and should not be construed as limitations on this application. In examples where specific techniques or conditions are not specified, the techniques or conditions described in the literature in the field or according to product specifications are followed. Reagents or instruments used without specifying the manufacturer are conventional products available commercially.

### I. Preparation method

### Example 1

### (1) Electrolyte

In an argon atmosphere glovebox (H₂O<0.1 ppm and O₂<0.1 ppm), a cyclic ester solvent ethylene carbonate and a linear ester solvent dimethyl carbonate were mixed uniformly at a mass ratio of 25:75 to obtain a mixed solvent. Then, lithium salts lithium hexafluorophosphate and lithium bis(trifluoromethane)sulfonimide (with a mass ratio of LiFSI to LiPF₆ of 3:1) were added and dissolved in the above mixed solvent to achieve a lithium salt mass percentage of 15%, and were stirred uniformly. An alkali metal salt NaPO₂F₂ and a film-forming additive 4,4'-Bi-1,3,2-dioxathiolane 2,2,2'2'-tetraoxide were added and mixed uniformly to obtain the electrolyte, where based on a total mass of the electrolyte, a mass percentage of alkali metal ion Na⁺ was 30 ppm, and a mass percentage of 4,4'-Bi-1,3,2-dioxathiolane 2,2,2'2'-tetraoxide was 2%.

### (2) Preparation of positive electrode plate

A 1wt% polyvinylidene fluoride binder was fully dissolved in N-methylpyrrolidone, and then 1wt% carbon black conductive agent and 98wt% lithium transition metal oxide positive electrode active material LiNi_{0.5}CoO₂Mn_{0.3}O₂ were added, mixed, and stirred uniformly to obtain a positive electrode slurry. The slurry was uniformly applied on a surface of a current collector aluminum foil to prepare a positive electrode film layer, and then the resulting positive electrode film layer was transferred to a vacuum drying oven for complete drying. A dried electrode plate was rolled and punched to obtain the positive electrode plate.

### (3) Preparation of negative electrode plate

A negative electrode active material artificial graphite, a conductive agent carbon black, a thickener carboxymethyl cellulose (CMC), and a binder styrene-butadiene rubber (SBR) were mixed at a weight ratio of 96:2:1:1 and dissolved in deionized water to form a negative electrode slurry. The negative electrode slurry was obtained under the action of a vacuum mixer, the slurry was applied on a surface of a copper foil, and the product was then transferred to a vacuum drying oven for complete drying, followed by slitting and die-cutting. A compacted density of the electrode plate film layer was adjusted to achieve a porosity of 40% for the negative electrode active material. Then the negative electrode plate was obtained.

### (4) Separator

A polypropylene film was used as the separator.

### (5) Preparation of battery

The positive electrode plate, separator, and negative electrode plate were stacked in order, with the separator positioned between the positive and negative electrode plates for isolation, and tabs were welded to a bare cell. The bare cell was placed in an aluminum shell and baked at 80°C to remove water, followed by injecting the above electrolyte and sealing to obtain an uncharged battery. The uncharged battery sequentially underwent standing, hot/cold pressing, formation, shaping, and capacity testing to obtain a lithium-ion secondary battery product of Example 1.

### Examples 2 to 30

The battery preparation methods in Examples 2 to 30 were substantially similar to that in Example 1, but preparation parameters of the electrolyte, positive electrode active material, and negative electrode active material were adjusted. Specific parameters are shown in Table 1.

### Comparative example 1

The battery preparation method in Comparative example 1 was substantially similar to that in Example 1, but the electrolyte did not contain a film-forming additive. Specific parameters are shown in Table 1.

### Comparative example 2

The battery preparation method in Comparative example 2 was substantially similar to that in Example 1, but no alkali metal salt was added to the electrolyte. Specific parameters are shown in Table 1.

### Comparative example 3

The battery preparation method in Comparative example 3 was substantially similar to that in Example 1, but neither alkali metal salt nor film-forming additive was added to the electrolyte. Specific parameters are shown in Table 1.

### Comparative examples 4 and 5

The battery preparation methods in Comparative examples 4 and 5 were substantially similar to that in Example 1, but the range of B/A was adjusted. Specific parameters are shown in Table 1.

### Comparative examples 6 and 7

The battery preparation methods in Comparative examples 6 and 7 were substantially similar to that in Example 28, but the range of B/A was adjusted Specific parameters are shown in Table 1.

### II. Performance test

### 1. Negative electrode plate performance test

### (1) Test for porosity of negative electrode active material layer

An inert gas, helium or nitrogen, was used to accurately measure a true volume of a sample according to a displacement method, and a porosity of the sample was obtained based on Boyle's law (pV=nRT, where p is pressure, V is gas volume, T is temperature, n is amount of substance of gas, and R is molar gas constant). The porosity P=(V11-V12)/V11×100%, where V11 represents an apparent volume of the negative electrode active material layer, and V12 represents a true volume of the negative electrode active material layer.

### 2. Battery performance test

### (1) Direct current resistance (DCR) test

At -25°C, the state of charge of a single battery was adjusted to 50% SOC, and the battery was left standing for 30 minutes, and a battery voltage at this time was recorded as U1 (V). The battery was discharged at 0.36C for 10 seconds, and a battery voltage at this time was recorded as U2 (V), with a corresponding battery discharge current I (mA) being 0.36×battery design capacity (mAh). The direct current resistance DCR (mΩ)=(U1-U2)/I.

### (2) Cycling performance test

The cycling performance test was as follows: At 25°C, a prepared battery was charged at a constant current of 2C to 4.25 V, then charged at a constant voltage of 4.25 V until the current dropped to 0.05C, left standing for 5 min, and then discharged at a constant current of 1C to 2.5 V. This was the first charge/discharge cycle of the battery, and a discharge capacity of this cycle was recorded as a discharge capacity at the first cycle of the battery (C1). The above steps were repeated for the same battery, and a process capacity at the n^{th} cycle (Cn) was recorded, with a capacity retention rate at n^{th} cycle = Cn/C1×100%. The number of cycles at which the capacity retention rate was 80% during cycling was recorded. The test process for the comparative examples and other examples was the same as above.

### (3) Metal dendrite test

The battery undergoing the above n cycles was disassembled in an argon atmosphere glovebox (H₂O<0.1 ppm and O₂<0.1 ppm), and the surface morphology of the negative electrode plate was visually observed to determine whether metal dendrites were formed. The absence of white spots on the negative electrode plate was determined as no metal dendrite, the presence of sporadic white spots on the negative electrode plate was determined as slight metal dendrite, and the presence of dense white spots on the negative electrode plate was determined as severe metal dendrite condition. The test process for the comparative examples and other examples was the same as above.

### 3. Determination of mass percentage of alkali metal ions

Test for alkali metal ions in the electrolyte: 10 ml of the prepared electrolyte was tested using ICAP-7400 inductively coupled plasma atomic emission spectroscopy from Thermo Fisher Scientific. When the battery is prepared as a secondary battery, 10 ml of free electrolyte was taken from an injection port of the secondary battery and tested using the above method.

### III. Analysis of test results of examples and comparative examples

Batteries in the examples and comparative examples were prepared according to the above methods, and various performance parameters were measured. Results are shown in Table 1 and Table 2 below.

**Table 1**

| Number | Electrolyte | | | | | | | |
|---|---|---|---|---|---|---|---|---|
| | Additive | | | | | Solvent | Lithium salt | |
| | Alkali metal salt | Mass percentage A of alkali metal ions (ppm) | Film-forming additive | Mass percentage B (%) | B/A | Cyclic ester solvent: linear ester solvent (wt%:wt%) | LiFSI:LiPF₆ mass ratio | Total mass percentage of lithium salt |
| Example 1 | NaPO₂F₂ | 30 | 4,4'-Bi-1,3,2-dioxathiolane | 2 | 667 | Ethylene carbonate: dimethyl carbonate (25:75) | 3 | 15% |
| | | | 2,2,2'2'-tetraoxide | | | | | |
| Example 2 | NaPO₂F₂ | 100 | 4,4'-Bi-1,3,2-dioxathiolane | 2 | 200 | Ethylene carbonate: dimethyl carbonate (25:75) | 3 | 15% |
| | | | 2,2,2'2'-tetraoxide | | | | | |
| Example 3 | NaPO₂F₂ | 5000 | 4,4'-Bi-1,3,2-dioxathiolane | 2 | 4 | Ethylene carbonate: dimethyl carbonate (25:75) | 3 | 15% |
| | | | 2,2,2'2'-tetraoxide | | | | | |
| Example 4 | NaPO₂F₂ | 7000 | 4,4'-Bi-1,3,2-dioxathiolane | 2 | 3 | Ethylene carbonate: dimethyl carbonate (25:75) | 3 | 15% |
| | | | 2,2,2'2'-tetraoxide | | | | | |
| Example 5 | NaPO₂F₂ | 5000 | 4,4'-Bi-1,3,2-dioxathiolane | 0.1 | 0.2 | Ethylene carbonate: dimethyl carbonate (25:75) | 3 | 15% |
| | | | 2,2,2'2'-tetraoxide | | | | | |
| Example 6 | NaPO₂F₂ | 5000 | 4,4'-Bi-1,3,2-dioxathiolane | 1.0 | 2 | Ethylene carbonate: dimethyl carbonate (25:75) | 3 | 15% |
| | | | 2,2,2'2'-tetraoxide | | | | | |
| Example 7 | NaPO₂F₂ | 5000 | 4,4'-Bi-1,3,2-dioxathiolane | 6 | 12 | Ethylene carbonate: dimethyl carbonate (25:75) | 3 | 15% |
| | | | 2,2,2'2'-tetraoxide | | | | | |
| Example 8 | NaPO₂F₂ | 5000 | 4,4'-Bi-1,3,2-dioxathiolane | 7 | 14 | Ethylene carbonate: dimethyl carbonate (25:75) | 3 | 15% |
| | | | 2,2,2'2'-tetraoxide | | | | | |
| Example 9 | KPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 10 | NaDFOB | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 11 | NaBF₄ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 12 | NaPO₂F₂ | 5000 | Fluoroethylene carbonate | 2 | 4.0 | Ethylene carbonate: dimethyl carbonate (25:75) | 3 | 15% |
| Example 13 | NaPO₂F₂ | 5000 | 1,3-propane sultone | 2 | 4.0 | Ethylene carbonate: dimethyl carbonate (25:75) | 3 | 15% |
| Example 14 | NaPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide: fluoroethylene carbonate (mass ratio 1:1) | | | | | |
| Example 15 | NaPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 16 | NaPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 17 | NaPO₂F₂ | 5000 | 4,4'-Bi-1,3,2-dioxathiolane | 2 | 4.0 | Ethylene carbonate: dimethyl carbonate (25:75) | 3 | 8% |
| | | | 2,2,2'2'-tetraoxide | | | | | |
| Example 18 | NaPO₂F₂ | 5000 | 4,4'-Bi-1,3,2-dioxathiolane | 2 | 4.0 | Ethylene carbonate: dimethyl carbonate (25:75) | 3 | 20% |
| | | | 2,2,2'2'-tetraoxide | | | | | |
| Example 19 | NaPO₂F₂ | 5000 | 4,4'-Bi-1,3,2-dioxathiolane | 2 | 4.0 | Ethylene carbonate: dimethyl carbonate (25:75) | 0.1 | 15% |
| | | | 2,2,2'2'-tetraoxide | | | | | |
| Example 20 | NaPO₂F₂ | 5000 | 4,4'-Bi-1,3,2-dioxathiolane | 2 | 4.0 | Ethylene carbonate: dimethyl carbonate (25:75) | 5 | 15% |
| | | | 2,2,2'2'-tetraoxide | | | | | |
| Example 21 | NaPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 22 | NaPO₂F₂ | 7000 | 4,4'-Bi-1,3,2-dioxathiolane | 0.1 | 0.14 | Ethylene carbonate: dimethyl carbonate (25:75) | 3 | 15% |
| | | | 2,2,2'2'-tetraoxide | | | | | |
| Example 23 | NaPO₂F₂ | 7000 | 4,4'-Bi-1,3,2-dioxathiolane | 0.14 | 0.20 | Ethylene carbonate: dimethyl carbonate (25:75) | 3 | 15% |
| | | | 2,2,2'2'-tetraoxide | | | | | |
| Example 24 | NaPO₂F₂ | 30 | 4,4'-Bi-1,3,2-dioxathiolane | 5 | 1667 | Ethylene carbonate: dimethyl carbonate (25:75) | 3 | 15% |
| | | | 2,2,2'2'-tetraoxide | | | | | |
| Example 25 | NaPO₂F₂ | 30 | 4,4'-Bi-1,3,2-dioxathiolane | 6 | 2000 | Ethylene carbonate: dimethyl carbonate (25:75) | 3 | 15% |
| | | | 2,2,2'2'-tetraoxide | | | | | |
| Example 26 | NaPO₂F₂ | 30 | 4,4'-Bi-1,3,2-dioxathiolane | 2 | 667 | Ethylene carbonate: dimethyl carbonate (25:75) | 3 | 15% |
| | | | 2,2,2'2'-tetraoxide | | | | | |
| Example 27 | NaPO₂F₂ | 7000 | 4,4'-Bi-1,3,2-dioxathiolane | 2 | 3 | Ethylene carbonate: dimethyl carbonate (25:75) | 3 | 15% |
| | | | 2,2,2'2'-tetraoxide | | | | | |
| Example 28 | NaPO₂F₂ | 5000 | 4,4'-Bi-1,3,2-dioxathiolane | 2 | 4.0 | Ethylene carbonate: dimethyl carbonate (25:75) | 3 | 15% |
| | | | 2,2,2'2'-tetraoxide | | | | | |
| Example 29 | NaPO₂F₂ | 5000 | 4,4'-Bi-1,3,2-dioxathiolane | 2 | 4.0 | Ethylene carbonate: dimethyl carbonate (5:95) | 3 | 15% |
| | | | 2,2,2'2'-tetraoxide | | | | | |
| Example 30 | NaPO₂F₂ | 5000 | 4,4'-Bi-1,3,2-dioxathiolane | 2 | 4.0 | Ethylene carbonate: dimethyl carbonate (35:65) | 3 | 15% |
| | | | 2,2,2'2'-tetraoxide | | | | | |
| Comparative example 1 | NaPO₂F₂ | 5000 | / | / | / | Ethylene carbonate: dimethyl carbonate (25:75) | 3 | 15% |
| Comparative example 2 | / | / | 4,4'-Bi-1,3,2-dioxathiolane | 2 | / | Ethylene carbonate: Dimethyl carbonate (25:75) | 3 | 15% |
| | | | 2,2,2'2'-tetraoxide | | | | | |
| Comparative example 3 | / | / | / | / | / | Ethylene carbonate: dimethyl carbonate (25:75) | 3 | 15% |
| Comparative example 4 | NaPO₂F₂ | 7000 | 4,4'-Bi-1,3,2-dioxathiolane | 0.01 | 0.01 | Ethylene carbonate: dimethyl carbonate (25:75) | 3 | 15% |
| | | | 2,2,2'2'-tetraoxide | | | | | |
| Comparative example 5 | NaPO₂F₂ | 1 | 4,4'-Bi-1,3,2-dioxathiolane | 8 | 80000. 00 | Ethylene carbonate: dimethyl carbonate (25:75) | 3 | 15% |
| | | | 2,2,2'2'-tetraoxide | | | | | |
| Comparative example 6 | NaPO₂F₂ | 7000 | 4,4'-Bi-1,3,2-dioxathiolane | 0.01 | 0.01 | Ethylene carbonate: dimethyl carbonate (25:75) | 3 | 15% |
| | | | 2,2,2'2'-tetraoxide | | | | | |
| Comparative example 7 | NaPO₂F₂ | 1 | 4,4'-Bi-1,3,2-dioxathiolane | 8 | 80000. 00 | Ethylene carbonate: dimethyl carbonate (25:75) | 3 | 15% |
| | | | 2,2,2'2'-tetraoxide | | | | | |

**Table 2**

| Number | Negative electrode active material | | | Positive electrode active material | Battery | | |
|---|---|---|---|---|---|---|---|
| | Substance | Porosity C | A/C (10⁻⁴) | | Direct current resistance (mΩ) | Cycle number (cycles) | Metal dendrite |
| Example 1 | Artificial graphite | 40% | 0.75 | LiNi_{0.5}Co_{0.2}Mn_{0.3}O₂ | 9 | 1721 | Slight |
| Example 2 | Artificial graphite | 40% | 2.50 | LiNi_{0.5}Co_{0.2}Mn_{0.3}O₂ | 8.8 | 1720 | None |
| Example 3 | Artificial graphite | 40% | 125.00 | LiNi_{0.5}Co_{0.2}Mn_{0.3}O₂ | 8 | 1750 | None |
| Example 4 | Artificial graphite | 40% | 175.00 | LiNi_{0.5}Co_{0.2}Mn_{0.3}O₂ | 7.5 | 1785 | None |
| Example 5 | Artificial graphite | 40% | 125.00 | LiNi_{0.5}Co_{0.2}Mn_{0.3}O₂ | 7.8 | 1321 | Slight |
| Example 6 | Artificial graphite | 40% | 125.00 | LiNi_{0.5}Co_{0.2}Mn_{0.3}O₂ | 7.9 | 1551 | None |
| Example 7 | Artificial graphite | 40% | 125.00 | LiNi_{0.5}Co_{0.2}Mn_{0.3}O₂ | 9.5 | 1850 | None |
| Example 8 | Artificial graphite | 40% | 125.00 | LiNi_{0.5}Co_{0.2}Mn_{0.3}O₂ | 9.7 | 1850 | None |
| Example 9 | Artificial graphite | 40% | 125.00 | LiNi_{0.5}Co_{0.2}Mn_{0.3}I₂ | 8 | 1758 | None |
| Example 10 | Artificial graphite | 40% | 125.00 | LiNi_{0.5}Co_{0.2}Mn_{0.3}O₂ | 8 | 1729 | None |
| Example 11 | Artificial graphite | 40% | 125.00 | LiNi_{0.5}CoO₂Mn_{0.3}O₂ | 8 | 1650 | None |
| Example 12 | Artificial graphite | 40% | 125.00 | LiNi_{0.5}CoO₂Mn_{0.3}O₂ | 7.9 | 1711 | None |
| Example 13 | Artificial graphite | 40% | 125.00 | LiNi_{0.5}CoO₂Mn_{0.3}O₂ | 8 | 1725 | None |
| Example 14 | Artificial graphite | 40% | 125.00 | LiNi_{0.5}Co_{0.2}Mn_{0.3}O₂ | 8 | 1750 | None |
| Example 15 | Artificial graphite | 20% | 250.00 | LiNi_{0.5}Co_{0.2}Mn_{0.3}O₂ | 8.3 | 1736 | Slight |
| Example 16 | Artificial graphite | 60% | 83.33 | LiNi_{0.5}Co_{0.2}Mn_{0.3}O₂ | 7.5 | 1815 | None |
| Example 17 | Artificial graphite | 40% | 125.00 | LiNi_{0.5}Co_{0.2}Mn_{0.3}O₂ | 8.5 | 1309 | Slight |
| Example 18 | Artificial graphite | 40% | 125.00 | LiNi_{0.5}Co_{0.2}Mn_{0.3}O₂ | 8.2 | 1550 | None |
| Example 19 | Artificial graphite | 40% | 125.00 | LiNi_{0.5}Co_{0.2}Mn_{0.3}O₂ | 8.1 | 1508 | None |
| Example 20 | Artificial graphite | 40% | 125.00 | LiNi_{0.5}Co_{0.2}Mn_{0.3}O₂ | 8.3 | 1738 | None |
| Example 21 | Silicon-carbon composite | 40% | 125.00 | LiNi_{0.5}Co_{0.2}Mn_{0.3}O₂ | 9.5 | 1325 | Slight |
| Example 22 | Artificial graphite | 30% | 233.33 | LiNi_{0.5}CoO₂Mn_{0.3}O₂ | 7.3 | 1527 | Slight |
| Example 23 | Artificial graphite | 30% | 233.33 | LiNi_{0.5}CoO₂Mn_{0.3}O₂ | 7.3 | 1550 | Slight |
| Example 24 | Artificial graphite | 40% | 0.75 | LiNi_{0.5}CoO₂Mn_{0.3}O₂ | 9.5 | 1636 | None |
| Example 25 | Artificial graphite | 20% | 1.50 | LiNi_{0.5}CoO₂Mn_{0.3}O₂ | 9.6 | 1625 | None |
| Example 26 | Artificial graphite | 60% | 0.50 | LiNi_{0.5}Co_{0.2}Mn_{0.3}O₂ | 8 | 1820 | None |
| Example 27 | Artificial graphite | 20% | 350.00 | LiNi_{0.5}Co_{0.2}Mn_{0.3}O₂ | 7.8 | 1650 | None |
| Example 28 | Artificial graphite | 40% | 125.00 | LiFePO₄ | 9.3 | 2025 | None |
| Example 29 | Artificial graphite | 40% | 125.00 | LiFePO₄ | 9.8 | 2267 | Slight |
| Example 30 | Artificial graphite | 40% | 125.00 | LiFePO₄ | 9.4 | 1836 | None |
| Comparative example 1 | Artificial graphite | 40% | 125.00 | LiNi_{0.5}Co_{0.2}Mn_{0.3}O₂ | 7.8 | 809 | Severe |
| Comparative example 2 | Artificial graphite | 40% | / | LiNi_{0.5}Co_{0.2}Mn_{0.3}O₂ | 10.2 | 1109 | Severe |
| Comparative example 3 | Artificial graphite | 40% | / | LiNi_{0.5}CoO₂Mn_{0.3}O₂ | 10 | 306 | Slight |
| Comparative example 4 | Artificial graphite | 40% | 175.00 | LiNi_{0.5}CoO₂Mn_{0.3}O₂ | 7.6 | 850 | Slight |
| Comparative example 5 | Artificial graphite | 40% | 0.03 | LiNi_{0.5}CoO₂Mn_{0.3}O₂ | 10 | 1334 | Slight |
| Comparative example 6 | Artificial graphite | 40% | 175.00 | LiFePO₄ | 8.9 | 1043 | Slight |
| Comparative example 7 | Artificial graphite | 40% | 0.03 | LiFePO₄ | 11.3 | 1456 | Severe |

According to the above results, the lithium-ion secondary batteries in Examples 1 to 30 all include an electrolyte, and the electrolyte includes alkali metal ions having an ionic radius greater than that of lithium ions and a film-forming additive. Based on a total mass of the electrolyte, the mass percentage A of the alkali metal ions and the mass percentage B of the additive satisfy 0.14≤B/A≤2000.

From the comparison of Examples 1 to 27 with Comparative example 1, it is evident that the electrolyte in the examples of this application includes the film-forming additive 4,4'-Bi-1,3,2-dioxathiolane 2,2,2'2'-tetraoxide, which is conducive to increasing the number of cycles at which the capacity retention rate is 80% during cycling of the battery. From the comparison of Examples 1 to 27 with Comparative example 2, it is evident that the electrolyte in the examples of this application includes alkali metal ions Na⁺ or K⁺ with an ionic radius greater than that of lithium ions, which is conducive to reducing the direct current resistance of the battery. From the comparison of Examples 1 to 27 with Comparative example 3, it is evident that the electrolyte in the examples of this application simultaneously includes alkali metal ions with an ionic radius greater than that of lithium ions and the film-forming additive, which is conducive to reducing the direct current resistance of the battery and increasing the number of cycles at which the capacity retention rate is 80% during cycling of the battery.

From the comparison between Examples 1 to 16 and 22 to 27 and Comparative examples 4 and 5, and comparison between Examples 28 and 29 with Comparative examples 6 and 7, it is evident that controlling the mass percentage A of the alkali metal ions and the mass percentage B of the additive to satisfy 0.14≤B/A≤2000, based on the total mass of the electrolyte, is conducive to increasing the number of cycles at which the capacity retention rate is 80% during cycling of the battery.

From Examples 1 to 8 and Examples 23 to 25, it is evident that controlling the mass percentage A of the alkali metal ions and the mass percentage B of the additive to satisfy 0.2≤B/A≤2000, based on the total mass of the electrolyte, reduces the direct current resistance of the battery, increases the number of cycles at which the capacity retention rate is 80% during cycling of the battery, and balances the power performance and cycling performance of the battery.

From Examples 3, 15, 16, 26, and 27, it is evident that controlling the porosity C of the negative electrode active material layer and the mass percentage A of the alkali metal ions in the total mass of the electrolyte to satisfy 5×10⁻⁵≤A/C≤0.035 improves both the direct current resistance and the number of cycles at which the capacity retention rate is 80% during cycling. From the comparison between Examples 3, 15, 16, 26, and 27, it is evident that controlling the porosity C of the negative electrode active material layer and the mass percentage A of the alkali metal ions in the total mass of the electrolyte to satisfy 5×10⁻⁵≤A/C≤0.025 further facilitates increasing the number of cycles at which the capacity retention rate is 80% during cycling of the battery.

From the comparison of Examples 2 to 4 with Example 1, it is evident that controlling the mass percentage A of the alkali metal ions to satisfy 100 ppm≤A≤7000 ppm, based on the total mass of the electrolyte, further reduces the direct current resistance of the battery, increases the number of cycles at which the capacity retention rate is 80% during cycling of the battery, and mitigates the metal dendrites of the battery.

From Examples 5 to 8, it is evident that controlling the mass percentage B of the film-forming additive to satisfy 0.1%≤B≤7%, based on the total mass of the electrolyte, contributes to reducing the direct current resistance of the battery and increasing the number of cycles at which the capacity retention rate is 80% during cycling of the battery. From the comparison of Examples 5 to 7 with Example 8, it is evident that further controlling the mass percentage B of the film-forming additive to satisfy 0.1%≤B≤6%, based on the total mass of the electrolyte, is conducive to further reducing the direct current resistance of the battery, improving the power performance of the battery.

From Examples 3 and 9, it is evident that the alkali metal ions in the electrolyte including Na⁺ or K⁺ are conducive to reducing the direct current resistance of the battery, increasing the number of cycles at which the capacity retention rate is 80% during cycling of the battery, and improving the metal dendrites of the battery.

From Examples 3 and 12 to 14, it is evident that the film-forming additive in the electrolyte including one or more of 4,4'-Bi-1,3,2-dioxathiolane 2,2,2'2'-tetraoxide, fluoroethylene carbonate, and 1,3-propane sultone enables the battery to achieve low direct current resistance, increase the number of cycles, and mitigate the metal dendrites of the battery.

From Examples 3, 15, and 16, it is evident that controlling the porosity C of the negative electrode active material layer to be 20% to 60% reduces the direct current resistance of the battery and improves the number of cycles at which the capacity retention rate is 80% during cycling of the battery.

From Examples 3, 17, and 18, it is evident that controlling the mass percentage of the lithium salt to be 8% to 20%, based on the total mass of the electrolyte, contributes to improving the direct current resistance of the battery and the number of cycles at which the capacity retention rate is 80% during cycling of the battery. From Example 3, 19, and 20, it is evident that the mass ratio of lithium salt LiFSI to lithium salt LiPF₆ being not less than 0.1 and not more than 5 also contributes to mitigating the metal dendrites of the battery.

From Examples 3 and 21, it is evident that artificial graphite or silicon-carbon composite may be used as the negative electrode active material layer. From Examples 3 and 28, it is evident that a positive electrode plate may be prepared using LiNi_{0.5}Co_{0.2}Mn_{0.3}O₂ positive electrode active material or LiFePO₄ positive electrode active material, contributing to obtaining a battery with low direct current resistance, high cycle number, and mitigated metal dendrites.

From Examples 28 and 29, it is evident that controlling the mass percentage of the cyclic ester solvent to be 5% to 35% and the mass percentage of the linear ester solvent to be 65% to 95%, based on the total mass of the solvent, contributes to improving the direct current resistance and cycle number of the battery.

It should be noted that this application is not limited to the above embodiments. The above embodiments are merely examples, and embodiments having substantially the same configuration and achieving the same effects as the technical ideas within the scope of the technical solutions of this application are included in the technical scope of this application. Additionally, without departing from the gist of this application, various modifications that can be conceived by persons skilled in the art applied to the embodiments, and other forms constructed by combining some of the constituent elements in the embodiments, are also included in the scope of this application.

## Claims

1. A lithium-ion secondary battery, **characterized by** comprising an electrolyte, wherein the electrolyte comprises alkali metal ions having an ionic radius greater than a radius of lithium ions and a film-forming additive; and
based on a total mass of the electrolyte, a mass percentage A of the alkali metal ions and a mass percentage B of the film-forming additive satisfy 0.10≤B/A≤6×10⁴.

2. The lithium-ion secondary battery according to claim 1, **characterized in that** the lithium-ion secondary battery comprises a negative electrode plate, the negative electrode plate comprises a current collector and a negative electrode active material layer that is located on at least one side of the current collector and that comprises at least a negative electrode active material, a porosity C of the negative electrode active material layer and the mass percentage A of the alkali metal ions in the total mass of the electrolyte satisfy 10⁻⁶≤A/C≤0.035, optionally, 5×10⁻⁵<A/C<0.025.

3. The lithium-ion secondary battery according to claim 1 or 2, **characterized in that** based on the total mass of the electrolyte, the percentage A of the alkali metal ions and the mass percentage B of the film-forming additive satisfy 0.14≤B/A≤2000.

4. The lithium-ion secondary battery according to any one of claims 1 to 3, **characterized in that** the alkali metal ions comprise one or more of Na⁺, K⁺, and Cs⁺.

5. The lithium-ion secondary battery according to any one of claims 1 to 4, **characterized in that** based on the total mass of the electrolyte, the mass percentage A of the alkali metal ions satisfies 1 ppm≤A≤7000 ppm, optionally, 100 ppm≤A≤7000 ppm.

6. The lithium-ion secondary battery according to any one of claims 1 to 5, **characterized in that** the electrolyte further comprises anions, and the anions comprise one or more of PO₂F₂⁻, FSO₃⁻, DFOB⁻, BF₄⁻, DFOP⁻, BOB⁻, and PO₃F²⁻.

7. The lithium-ion secondary battery according to any one of claims 1 to 6, **characterized in that** the film-forming additive comprises one or more of a fluorinated carbonate compound, a sulfate compound, and a sulfonate compound.

8. The lithium-ion secondary battery according to claim 7, **characterized in that** the fluorinated carbonate compound comprise one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, and trifluoromethylethylene carbonate, and optionally comprises fluoroethylene carbonate;
the sulfate compound comprises one or more of 4,4'-Bi-1,3,2-dioxathiolane 2,2,2'2'-tetraoxide, ethylene sulfate, diethyl sulfate, dimethyl sulfate, and 4,4-bis(1,3,2-dioxathiolane)-2,2,2,2-tetraoxide, and optionally comprises one or more of 4,4'-Bi-1,3,2-dioxathiolane 2,2,2'2'-tetraoxide and ethylene sulfate; and/or
the sulfonate compound comprises one or more of 1,3-propane sultone, propylene sultone, and 3-fluoro-1,3-propane sultone, and optionally comprises 1,3-propane sultone.

9. The lithium-ion secondary battery according to any one of claims 1 to 8, **characterized in that** based on the total mass of the electrolyte, the mass percentage B of the film-forming additive satisfies 0.1%≤B≤7%, optionally, 0.1%≤B≤6%.

10. The lithium-ion secondary battery according to any one of claims 2 to 9, **characterized in that** the porosity C of the negative electrode active material layer is 20% to 60%, optionally, 20% to 40%.

11. The lithium-ion secondary battery according to any one of claims 1 to 10, **characterized in that** based on the total mass of the electrolyte, a mass percentage of the lithium salt is 8% to 20%, optionally, 8% to 15%.

12. The lithium-ion secondary battery according to any one of claims 1 to 11, **characterized in that** the lithium salt comprises a first lithium salt, a second lithium salt, or a combination of the first lithium salt and the second lithium salt, and each of the first lithium salt and the second lithium salt is independently selected from one of LiFSI, LiPF₆, LiBF₄, LiTFSI, LiClO₄, LiAsF₆, LiBOB, LiDFOB, and LiDFOP.

13. The lithium-ion secondary battery according to claim 12, **characterized in that** the first lithium salt is selected from LiFSI, and the second lithium salt is selected from LiPF₆; and
a mass ratio of the first lithium salt to the second lithium salt is not less than 0.1 and not greater than 5, and optionally, the mass ratio of the first lithium salt to the second lithium salt is not less than 3 and not greater than 5.

14. The lithium-ion secondary battery according to any one of claims 1 to 13, **characterized in that** the electrolyte further comprises a solvent, and the solvent comprises a cyclic ester solvent and/or a linear ester solvent;
the cyclic ester solvent comprises one or more of ethylene carbonate and propylene carbonate; and
the linear ester solvent comprises one or more of dimethyl carbonate, diethyl carbonate, methyl propyl carbonate, ethyl methyl carbonate, methyl formate, methyl acetate, ethyl acetate, butyl acetate, methyl propionate, methyl butyrate, ethyl butyrate, propyl butyrate, butyl butyrate, isopropyl acetate, and isoamyl acetate.

15. The lithium-ion secondary battery according to claim 14, **characterized in that** based on a total mass of the solvent, a mass percentage of the cyclic ester solvent is A, and a mass percentage of the linear ester solvent is (100%-A);
wherein the mass percentage A of the cyclic ester solvent is 2% to 40%, optionally, 5% to 35%.

16. The lithium-ion secondary battery according to any one of claims 2 to 15, **characterized in that** the negative electrode active material comprises one or more of artificial graphite, natural graphite, soft carbon, hard carbon, silicon-carbon composite, lithium titanate, and silicon-oxygen composite.

17. The lithium-ion secondary battery according to any one of claims 1 to 16, **characterized in that** the lithium-ion secondary battery comprises a positive electrode plate, and the positive electrode plate comprises one or more of a lithium transition metal oxide positive electrode active material, and a lithium-containing phosphate positive electrode active material.

18. An electric apparatus, **characterized by** comprising the lithium-ion secondary battery according to any one of claims 1 to 17.
